# EUROPEAN PATENT APPLICATION

(11) **EP 4 601 363 A1**
(43) Date of publication of application: **13.08.2025**
(21) Application number: 23874488.2
(22) Date of filing: 06.07.2023
(51) Int. Cl.: H04W 48/16, H04B 7/0413, H04W 16/28, H04W 88/12

(54) **CONTROL DEVICE, METHOD, AND PROGRAM**

(30) Priority: 03.10.2022 JP 2022159227
(71) Applicant: KDDI Corporation, Tokyo 163-8003 (JP)
(72) Inventor: IKAMI, Akio, Fujimino-shi, Saitama 356-8502 (JP); AIHARA, Naoki, Fujimino-shi, Saitama 356-8502 (JP)
(74) Representative: Mathys & Squire
(86) International application number: PCT/JP2023/025069
(87) International publication number: WO 2024/075354

(57) **Abstract**

A control apparatus executes, first processing of receiving, from each one of a plurality of signal processing apparatuses, information of a received power of a reference signal which is transmitted via uplink and/or downlink between a user equipment and an access point; second processing of receiving, from each one of the plurality of signal processing apparatuses, information of a transfer function of a channel between a user equipment that the signal processing apparatus serves and an access point; and third processing of selecting, for each user equipment, an access point that serves the user equipment on a basis of the information of the received power received in the first processing and the information of the transfer function received in the second processing.

## Description

### TECHNICAL FIELD

The present invention relates to a control apparatus that determines an access point cluster for each user equipment in an open radio access network, a method, and a program.

### BACKGROUND ART

In a known cellular system, radio signal interference between cells may cause the communication quality to be degraded at the cell edge. Regarding this, in Beyond 5G (5G, fifth generation mobile communication systems), CF-mMIMO (Cell-free massive MIMO) is being focused on as a communication scheme that can resolve interference between cells and can make the user throughput uniform. By collectively processing signals transmitted and received by dispersed APs (Access points) at a CPU (Central processing unit), the APs can cooperate so that optimization of the radio signals for which spatial multiplexing is performed for each user equipment is possible.
with CF-mMIMO, processing is executed to remove interference from signals transmitted and received by the AP cluster using an estimated channel calculated from a reference signal. This interference removal processing is performed using MMSE (Minimum Mean Square Error) or the like. As a reference signal, a DMRS (Demodulation Reference Signal) for uplink post coding or an SRS (Sounding Reference Signal) for downlink precoding is used.

REs (Resource Elements) used in DMRS/SRS are allocated to each UE that a DU (distributed unit, corresponding to a CPU) connects to in a 3GPP standard (NPL 4). An RE region that can be used in DMRS/SRS is defined in the 3GPP standard.

To reduce the signal processing amount at the CPU, an AP clustering technology has been proposed that selects an AP group (AP cluster) for transmitting and receiving data for each user (NPL 1). By cooperative processing being executed only for the transmitting and receiving of signals of the AP cluster for each user, the signal processing amount at the CPU can be reduced.

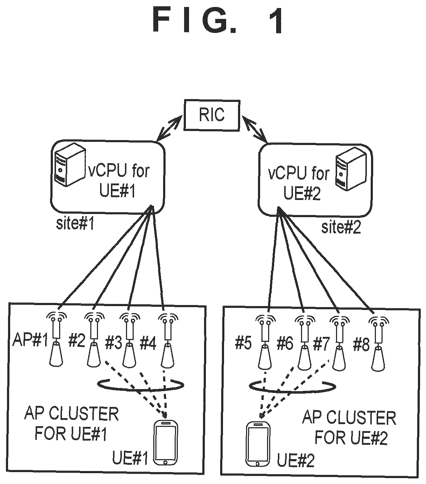

FIG. 1 is a diagram that schematically illustrates the AP clustering technology of a known method. Regarding UE (user equipment) #1 and #2, AP #2 to AP #4 are selected as the AP group for UE #1 and the signals are collectively processed at the CPU of site #1, and AP #5 to AP #7 are selected as the AP group for UE #2 and the signals are collectively processed at the CPU of site #2.

Regarding determining a specific AP cluster, in order to select an appropriate AP cluster according to the movement of the user, the AP cluster can be controlled using RIC (RAN Intelligent Controller) specified in O-RAN (open radio access network) (NPL 2). Also, as an AP cluster selection method when using CF-mMIMO, a method of selecting an AP on the basis of an SS-RSRP (SS (synchronization signal)-reference signal received power), which is a known IF (interface) has been proposed (NPL 1), wherein the AP with the highest RSRP is set as the master AP, and the AP with an RSRP within a threshold from the RSRP of the master AP are set as the AP cluster of the UE.

Regarding this, the SS-RSRP may be set as a quality measurement value using a synchronization signal (NPL 3), and the received power per AP (RU) can be obtained by a DU (distributed unit corresponding to a CPU).

### CITATION LIST

### PATENT LITERATURE

NPL 1: E. Bjornson and L. Sanguinetti, "Scalable Cell-Free Massive MIMO Systems", in IEEE Transactions on Communications, vol. 68, no. 7, pp. 4247-4261, July 2020.
NPL 2: O-RAN WG1, "Use Cases Detailed Specification", v06.00.02
NPL 3: 3GPP TS28.552, "5G performance measurements", v16.1.0
NPL 4: 3GPP TS38.211, "Physical channels and modulation"

### SUMMARY OF INVENTION

### TECHNICAL PROBLEM

However, with the known AP clustering technology, a cluster is selected on the basis of the RSRP. Thus, though an AP cluster with a high RSRP can be selected, selection of an AP cluster with low spatial correlation has not been taken into account. In a case where the spatial correlation of the selected AP cluster (for example, AP #2 to AP #4 selected for UE #1 of FIG. 1) is high, interference isolation of the MIMO may not sufficiently function and a high wireless quality may be unable to be ensured.

### SOLUTION TO PROBLEM

In light of the problems with the known technology described above, the present invention provides technology that can select an AP cluster with a low spatial correlation.

A control apparatus according to an aspect of the present invention is a control apparatus for a radio access network of an O-RAN (open radio access network) specification, the radio access network being provided with a user equipment, an access point that transmits and receives radio signals with a user equipment, a plurality of signal processing apparatuses that execute signal processing for an access point, and the control apparatus, the control apparatus executing: first processing of receiving, from each one of the plurality of signal processing apparatuses, information of a received power of a reference signal which is transmitted via uplink and/or downlink between a user equipment and an access point; second processing of receiving, from each one of the plurality of signal processing apparatuses, information of a transfer function of a channel between a user equipment that the signal processing apparatus serves and an access point; and third processing of selecting, for each user equipment, an access point that serves the user equipment on a basis of the information of the received power received in the first processing and the information of the transfer function received in the second processing.

### ADVANTAGEOUS EFFECTS OF INVENTION

According to the present invention, by using information of a transfer function, an AP cluster can be selected with a low spatial correlation.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.

FIG. 1 is a diagram schematically illustrating a known method.
FIG. 2 is a block diagram illustrating an example of the configuration of a radio access network according to an embodiment.
FIG. 3 is a block diagram illustrating an example of the configuration of a communication control system according to an embodiment.
FIG. 4 is a diagram of a process according to the present embodiment relating to uplink.
FIG. 5 is a diagram of a process according to the present embodiment relating to downlink.

### DESCRIPTION OF EMBODIMENTS

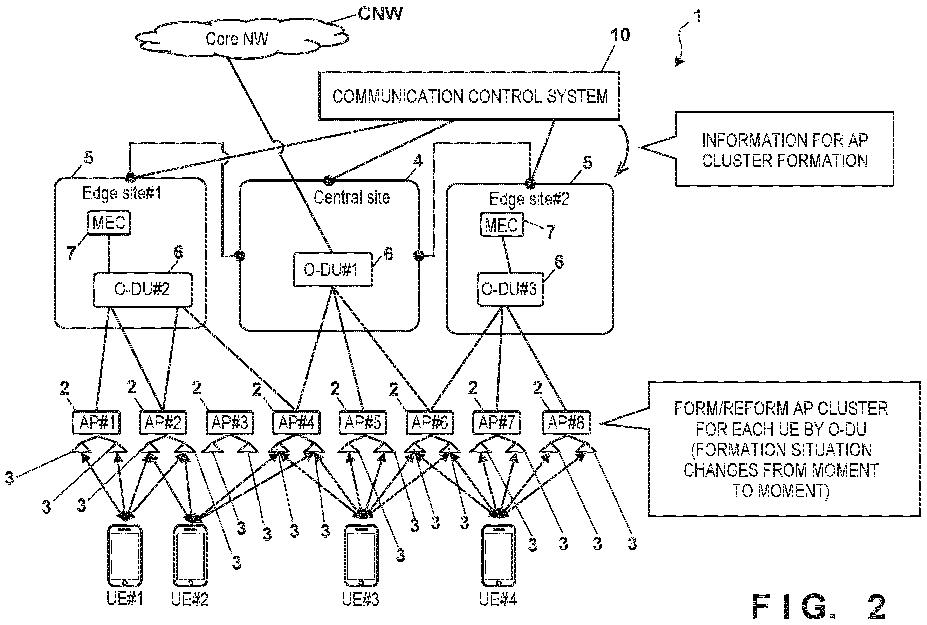

FIG. 2 is a block diagram illustrating an example of the configuration of a radio access network according to an embodiment. O-RAN specification is applied to a radio access network (RAN) 1 illustrated in FIG. 2.

In the RAN 1, a plurality of access points (AP) 2 (AP #1, AP #2, ...) are disposed in a dispersed arrangement. In the RAN 1, from among the plurality of dispersed APs 2, an AP cluster (access point group) for transmitting and receiving radio signals is formed for each user equipment (UE). In the example of FIG. 2, for example, for UE #1, an AP cluster is formed from two APs 2 (AP #1 and AP #2). For UE #2 and the other UEs, an AP cluster is formed in accordance with each UE.

Note that the example of FIG. 2 is an example of a specific AP cluster formed for a UE for a certain specific time (moment), and as the UE or the like moves with the progress of time, the AP cluster group formed by the RAN 1 according to the present embodiment also dynamically changes from moment to moment.

Each AP 2 of an AP cluster of a certain UE transmits and receives radio signals with the UE via its own antenna 3. For example, two APs 2 (AP #1 and AP #2) of the access point group for the UE #1 transmit and receive radio signals with the UE #1 via each antenna 3.

Each AP cluster is connected in a communication-enabling manner to an O-DU (distributed unit) 6 serving it. The O-DU 6 executes signal processing relating to the AP cluster that it serves. In the example of FIG. 2, for example, an O-DU #1 executes signal processing relating to an AP cluster (AP #4, AP #5, and AP #6) for the UE #3. In a similar manner, an O-DU #2 and others execute signal processing relating to AP clusters that they serve.

The signal processing relating to the access point group executed by the O-DU 6 is, for example, SU-MIMO (Single User MIMO), MU-MIMO (MultiUser MIMO), or similar signal processing.

The O-DU #1 is provided in a central site 4 and connected to a core network CNW. The O-DU #2 is provided in an edge site #1_5 (here, an underscore is used as a delimiter for differentiating between the identification number #1 and the reference number 5 and the same applies hereinafter) and connected to the core network CNW via the central site 4. A MEC (Multi-access Edge Computer) server 7 is provided in the edge site #1_5. The O-DU #3 is provided in an edge site #2_5. The MEC server 7 is provided in the edge site #2_5.

A communication control system 10 is connected in a communication-enabling manner to each site 4, 5. The communication control system 10 performs control for each O-DU 6. The communication control system 10 provides information for forming an AP cluster corresponding to the UE to the O-DU 6. The O-DU 6 forms an AP cluster corresponding to the UE that it serves, on the basis of the information provided from the communication control system 10.

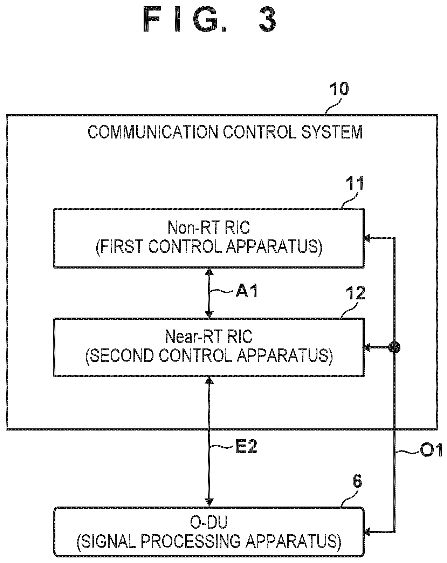

FIG. 3 is a block diagram illustrating an example of the configuration of the communication control system 10 according to an embodiment. The communication control system 10 includes a Non-RT RIC (non-real time RAN intelligent controller) 11 and a Near-RT RIC (near real time RAN intelligent controller) 12. The Non-RT RIC 11 is implemented using an SMO (Service and Management Orchestration) frame work.

The Non-RT RIC 11 and the Near-RT RIC 12 collects information such as KPI (key performance indicators), for example, from the O-DU 6 via an O1 interface. The O1 interface is specified by the O-RAN (NPL 2 described above) specification. The parameters that can be collected by the O1 interface correspond to the parameters specified in NPL 3 described above. Examples of the parameters include DL PRB usage, UL PRB usage, Average DL UE throughput, Average UL UE throughput, Number of PDU Sessions requested, and the like.

The Non-RT RIC 11 analyzes the information collected from the O-DU 6 and performs a settings change for the Near-RT RIC 12 on the basis of the analysis result. Here, the Non-RT RIC 11 provides the settings change information to the Near-RT RIC 12 via an A1 interface. The A1 interface is specified in the O-RAN specification.

The Near-RT RIC 12 analyzes the information collected from the O-DU 6 and performs a settings change for the O-DU 6 on the basis of the analysis result. Here, the Near-RT RIC 12 provides the settings change information to the O-DU 6 via an E2 interface. The E2 interface is specified in the O-RAN specification.

Note that as illustrated in FIG. 3, as the functional configuration, the Non-RT RIC 11 forms a first control apparatus, the Near-RT RIC 12 forms a second control apparatus, and the O-DU 6 forms a signal processing apparatus.

A cluster selection method for implementing interference removal according to the present embodiment will be described below. The present embodiment is as described as follows in terms of the overview, and includes adding information that is collected in a known framework.

In other words, the cluster selection of a known method according to NPL 1 and 3 has the following problem. Specifically, power information such as SS-RSRP is included in the information collected for cluster selection from the DU to the RIC. However, since phase information between AP-UE is not included, the information is not obtained at the RIC. (In other words, with a known method, at the E2/O1 interface, Performance Measurements information as specified in 3GPP 28.552 (NPL 3) can be collected. In 3GPP 28.552, as the MU-MIMO-related Performance Measurements, scheduling statistical information such as Scheduled PUSCH/PDSCH RBs per layer of MU-MIMO or the like and power information such as SS-RSRP and the like are specified. However, phase information between AP-UE is not specified.)

Thus, with a known method, the RIC cannot calculate an uplink correlation and a downlink correlation between APs, and the RIC may select an AP cluster with an AP with a high SS-RSRP but with a high AP correlation. As a result, at the AP with high spatial correlation, interference isolation of the MIMO may not sufficiently function and high wireless quality may be unable to be ensured.

In light of the problem described above, in the present embodiment, resource allocation information of the two reference signals described below for each of uplink and downlink is added to the data collection IF (E2/O1 interface of the O-RAN) from the DU to the RIC, and control is performed to form an AP cluster on the basis of this information. Note that the AP cluster formed as a result can be assumed to mainly be the same for both uplink and downlink. However, the AP cluster formed for uplink and downlink may be different.
(1) Regarding uplink, transfer function information estimated using DMRS
(2) Regarding downlink, transfer function information estimated using SRS

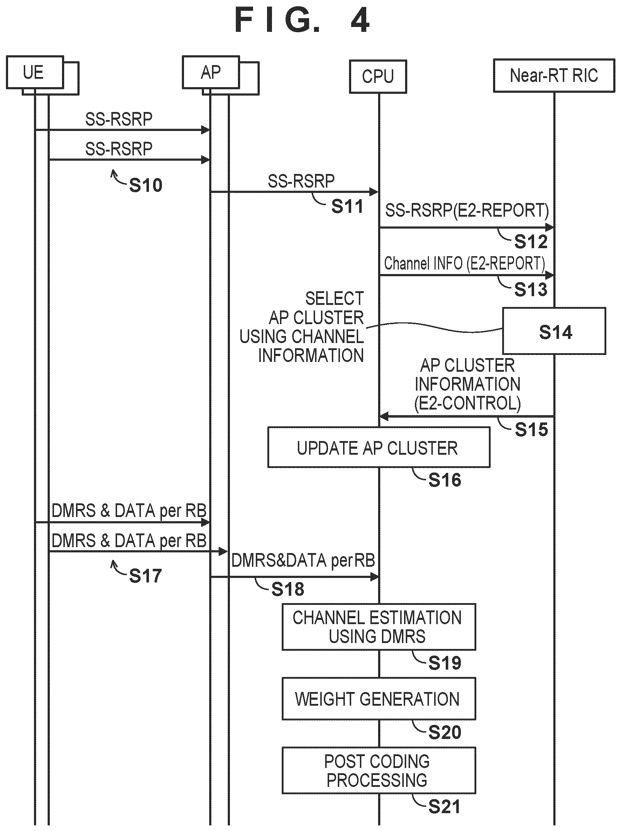

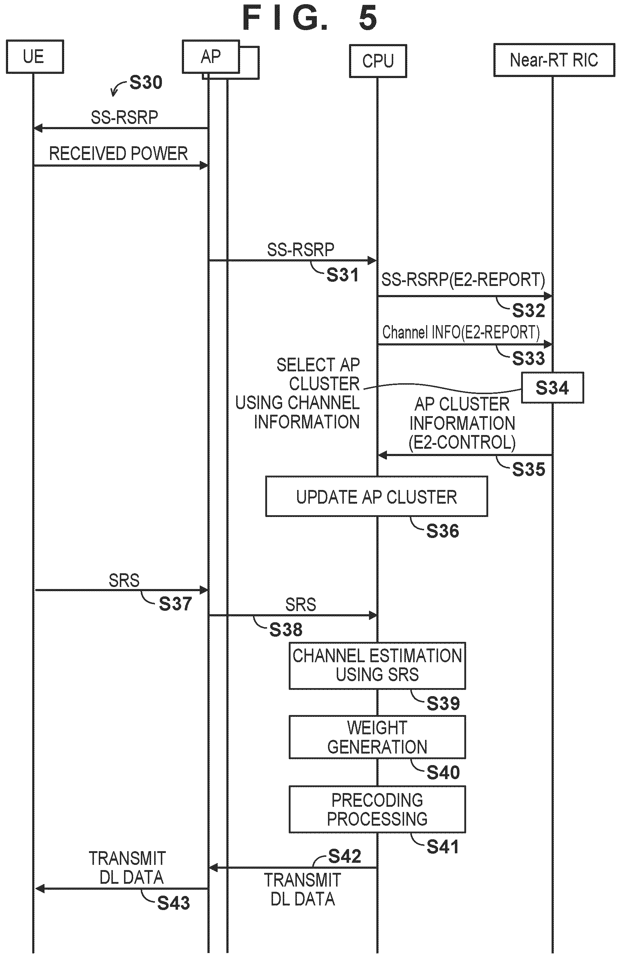

FIG. 4 is a diagram of a process according to the present embodiment relating to the (1) uplink described above. FIG. 5 is a diagram of a process according to the present embodiment relating to the (2) downlink described above. Note that in FIG. 4 and FIG. 5, UE, AP, CPU, Near-RT RIC appear as operation agents. These correspond to the UEs #1, #2, and so on, the APs 2, any one of the O-DUs 6, and the Near-RT RIC 12 illustrated in FIGS. 2 and 3 described above, but since the distinction between these is clear, reference signs will not be attached, and these will be abbreviated to UE, AP, CPU, and Near-RT RIC as illustrated in FIGS. 4 and 5.

Also, hereinafter, Near-RT RIC will be abbreviated to RIC.

Note that before the process of FIGS. 4 and 5 is started, an AP cluster may be formed in advance and the AP cluster may be re-formed via the process of FIGS. 4 and 5. A method for forming an AP cluster in advance may include performing (a) and (b) described below according to the method of PTL 1 described above.
(a) Transmitting, from the RIC to the CPU, access point group information (information of the AP cluster for each UE) indicating the configuration of the AP group for transmitting and receiving radio signals for each UE from among the plurality of dispersed APs.
(b) The CPU receiving the access point group information transmitted from the RIC, executing signal processing (channel estimation involving interference removal and the like) relating to the access points on the basis of the received access point group information, and forming an AP cluster for each UE.

Alternatively, reforming the AP cluster with the method according to the present embodiment may be continuously performed.

Each step of an embodiment relating to the uplink of FIG. 4 will be described below.

In step S10, each UE transmits a reference signal for SS-RSRP measurement to the corresponding AP (UE of the AP cluster already determined for the UE), and the received power of the SS-RSPR is measured at the AP. In step S11, each AP transmits the information of the SS-RSPR measured for each UE to the CPU.

In step S12, the CPU transmits the SS-RSPR information (information of the SS-RSRP of all APs and all UEs handled by the CPU) to the RIC via the E2 interface.

In step S13, as additional collection information according to the present embodiment as described above in summary, the CPU transmits "Estimation channel information using DMRS per UE-AP" to the RIC via the E2 interface. Here, regarding the already formed cluster, the CPU uses the SS-RSPR information received in step S12 to be able to estimate the estimation channel information as the information of a transfer function h (channel matrix h) of a channel between each UE-AP. Thus, the estimation channel information can be transmitted in step S13.

In step S14, the CPU selects an AP cluster to be formed for each UE using each piece of information received in steps S12 and S13. In step S15, the information of the selected AP cluster is transmitted to the CPU via the E2 interface by the CPU. In step S16, the AP cluster in the CPU is updated by the AP cluster selected and transmitted, and an instruction is transmitted to each AP and each UE so as to cause the updated AP cluster to be formed.

The cluster selection in step S14 may be performed using the SS-RSPR information received in step S12. For example, as in the known method of NPL 1 described above, the AP with the highest RSRP may be set as the master AP, and the APs within a threshold from the RSRP of the master AP may be set as the AP cluster of the UE.

In the present embodiment, further, in the cluster selection based on the SS-RSPR information as described above, by also using the estimation channel information received in step S13, an AP that may cause interference can be made to not be selected. Specifically, by performing the processing 1 and 2 described below, an AP that may cause interference can be excluded.

### (Processing 1)

On the basis of the information of the transfer function h, for each UE, an expected SINR value is calculated for an AP cluster in a case where the number of APs is increased/decreased from the current AP cluster.

### (Processing 2)

Whether the wireless quality required by each UE is satisfied is determined, and the AP cluster is adjusted so that the wireless quality can be ensured within the computer resource restrictions. For example, in the case of the example of FIG. 1, whether the wireless quality required by UE #1 and UE #2 is satisfied is determined and the AP cluster for each of UE #1 and UE #2 is adjusted so that the wireless quality can be ensured within the computer resource restrictions of CPU #1 and CPU #2, which function as the computers that respectively have already served UE #1 and UE #2 to produce a cluster reformation result.

In a case where the wireless quality required for the use service of the UE is insufficient, processing is executed to add the AP with the highest RSRP not included in the AP cluster into the AP cluster. In a case where the quality is excessive (for example, +5 dB or greater), the AP with the lowest RSRP in the AP cluster is removed from the AP cluster. The same processing is executed for all UEs, and the processing 1 is executed again. By repeating the flow of processing 1 → 2 a certain number of times, a quality suitable for the UE can be provided.

In step S14, as described above, an AP cluster is re-formed avoiding any APs with a high spatial correlation and in step S16, the AP cluster is updated to the re-formed AP cluster. This can improve the wireless quality in the steps following step S17.

In step S17, on the basis of the re-formed AP cluster, a signal storing DMRS and data per RB is transmitted to the corresponding AP from each UE; in step S18, each AP transmits the result of demodulation of the DMRS signal and data to the CPU; in step S19, channel estimation is performed using this result; in step S20, weights of the channel estimation result (a channel matrix of estimated characteristics of transmission paths from the transmitting side UE to the receiving side AP) is generated; in step S21, post coding processing is executed; and then the flow of FIG. 4 ends.

Each step of an embodiment relating to the downlink of FIG. 5 will be described below.

In step S30, each AP transmits a reference signal for SS-RSRP measurement to the corresponding UE (UE belonging to the AP cluster already determined for the AP), and the received power of the SS-RSPR at the UE is measured and the measurement results are sent back to the AP. In step S31, each AP transmits the information of the SS-RSRP measured for each UE to the CPU.

In step S32, the CPU transmits the SS-RSPR information (information of the SS-RSPR of all APs and all UEs served by the CPU) to the RIC via the E2 interface.

In step S33, as additional collection information according to the present embodiment as described above in summary, the CPU transmits "Estimation channel information using SRS per UE-AP" to the RIC via the E2 interface. Here, as in step S13 in the case of uplink, in step S33 also, regarding the already formed cluster, the CPU uses the SS-RSPR information received in step S32 to be able to estimate the estimation channel information as the information of a transfer function h (channel matrix h) of a channel between each UE-AP. Thus, the estimation channel information can be transmitted in step S33.

In step S34, the CPU selects an AP cluster to be formed for each UE using each piece of information received in steps S32 and S33. In step S35, the information of the selected AP cluster is transmitted to the CPU via the E2 interface by the CPU. In step S36, the AP cluster in the CPU is updated by the AP cluster selected and transmitted, and an instruction is transmitted to each AP and each UE so as to cause the updated AP cluster to be formed.

The cluster selection of step S34 may be performed using the SS-RSPR information received in step S32. For example, as in the known method of NPL 1 described above, the AP with the highest RSRP may be set as the master AP and the APs within a threshold from the RSRP of the master AP may be set as the AP cluster of the UE.

In the present embodiment, further, in the cluster selection based on the SS-RSPR information as described above, an AP with high spatial correlation can be made to not be selected by using the channel estimation information received in step S33. Specifically, in a similar manner to step S14 of FIG. 4, in which the DMRS information being used as information for uplink in step S14, in step S34, SRS information may be used as information for downlink to execute the processing 1 and 2.

In step S34, as described above, an AP cluster is re-formed avoiding any APs with a high spatial correlation and in step S36, the AP cluster is updated to the re-formed AP cluster. This can prevent a decrease in the channel estimation accuracy in the steps following step S37 and the wireless quality can be improved.

In step S37, on the basis of the re-formed AP cluster, an SRS signal is transmitted to the corresponding AP from each UE; in step S38, each AP transmits the received power of the SRS signal to the CPU; in step S39, the CPU performs channel estimation using this result; in step S40, weights of the channel estimation result (a channel matrix of estimated characteristics of transmission paths from the transmitting side UE to the receiving side AP) is generated; in step S41, the CPU executes precoding processing; in step S42, the CPU transmits the DL data (the weights obtained through the precoding processing) to the AP; in step S43, the AP further transmits the received DL data to the UE; and then the flow of FIG. 5 ends.

According to the embodiment described above, an AP cluster can be selected so that the spatial correlation is lowered. Various supplementary examples, alternative examples, additional examples, and the like will be described below.

### <Providing the Hardware Configuration and Present Embodiment as a Program>

The communication control system 10 includes computer hardware such as a CPU, a memory, and the like, and each function of the communication control system 10 is implemented by the CPU executing a computer program stored in the memory. Note that the communication control system 10 may be configured using a general-purpose computer apparatus or may be configured as a dedicated hardware apparatus. For example, the communication control system 10 may be configured using a server computer connected to a communication network. Also, each function of the communication control system 10 may be implemented by cloud computing. Also, communication control system 10 may be implemented by an individual computer or may be implemented by the functions of the communication control system 10 being dispersed amongst a plurality of computers.

According to the communication control system 10 of the present embodiment, a contribution can be made to the infrastructure development of information communication technology. This contributes to Goal 9 of the sustainable development goals (SDGs) initiated by the United Nations of "building resilient infrastructure, promoting sustainable industrialization, and fostering innovation".

The present application claims priority from Japanese Patent Application No. 2022-159227 filed on October 3, 2022, which is hereby incorporated by reference herein.

## Claims

1. A control apparatus for a radio access network of an O-RAN (open radio access network) specification, the radio access network being provided with a user equipment, an access point that transmits and receives radio signals with a user equipment, a plurality of signal processing apparatuses that execute signal processing for an access point, and the control apparatus, the control apparatus executing:
first processing of receiving, from each one of the plurality of signal processing apparatuses, information of a received power of a reference signal which is transmitted via uplink and/or downlink between a user equipment and an access point;
second processing of receiving, from each one of the plurality of signal processing apparatuses, information of a transfer function of a channel between a user equipment that the signal processing apparatus serves and an access point; and
third processing of selecting, for each user equipment, an access point that serves the user equipment on a basis of the information of the received power received in the first processing and the information of the transfer function received in the second processing.

2. The control apparatus according to claim 1, wherein
the control apparatus is implemented using a NearRT RIC (Near-Real Time RAN Intelligent Controller), and each one of the plurality of signal processing apparatuses is implemented using an O-DU (O-RAN Distributed Unit), and
the receiving in the second processing is performed using an interface between NearRT RIC and O-DU.

3. The control apparatus according to claim 1, wherein
in the third processing, the selecting is performed so that a received power is increased and so that a spatial correlation between a plurality of access points is decreased.

4. A method executed by a control apparatus for a radio access network of an O-RAN (open radio access network) specification, the radio access network being provided with a user equipment, an access point that transmits and receives radio signals with a user equipment, a plurality of signal processing apparatuses that execute signal processing for an access point, and the control apparatus, the method comprising:
first processing of receiving, from each one of the plurality of signal processing apparatuses, information of a received power of a reference signal which is transmitted via uplink and/or downlink between a user equipment and an access point;
second processing of receiving, from each one of the plurality of signal processing apparatuses, information of a transfer function of a channel between a user equipment that the signal processing apparatus serves and an access point; and
third processing of selecting, for each user equipment, an access point that serves the user equipment on a basis of the information of the received power received in the first processing and the information of the transfer function received in the second processing.

5. A program that causes a computer to function as a control apparatus for a radio access network of an O-RAN (open radio access network) specification, the radio access network provided with a user equipment, an access point that transmits and receives radio signals with a user equipment, a plurality of signal processing apparatuses that execute signal processing for an access point, and a control apparatus, the program causing the computer to execute:
first processing of receiving, from each one of the plurality of signal processing apparatuses, information of a received power of a reference signal which is transmitted via uplink and/or downlink between a user equipment and an access point;
second processing of receiving, from each one of the plurality of signal processing apparatuses, information of a transfer function of a channel between a user equipment that the signal processing apparatus serves and an access point; and
third processing of selecting, for each user equipment, an access point that serves the user equipment on a basis of the information of the received power received in the first processing and the information of the transfer function received in the second processing.
